Europäisches Patentamt

European Patent Office

Office européen des brevets

(11) Publication number: **0 286 232**
**A1**

## EUROPEAN PATENT APPLICATION

(21) Application number: 88301922.6

(22) Date of filing: 04.03.88

(51) Int. Cl.4: **B01D 53/34**

(30) Priority: 06.03.87 DK 1196/87

(43) Date of publication of application:
**12.10.88 Bulletin 88/41**

(84) Designated Contracting States:
**DE FR GB NL SE**

(71) Applicant: **F.L. Smidth & Co. A/S**
**77 Vigerslev Alle**
**DK-2500 Valby Copenhagen(DK)**

(72) Inventor: **Touborg, Jorn**
**Vigerslev Alle 77**
**DK-2500 Valby(DK)**

(74) Representative: **Brunner, Michael John et al**
**GILL JENNINGS & EVERY 53-64 Chancery**
**Lane**
**London WC2A 1HN(GB)**

(54) **Process and apparatus for desulfurizing a hot, sulfur oxide containing gas.**

(57) A process and apparatus for desulfurizing a hot, sulfur oxide-containing flue gas is disclosed wherein the hot flue gas is reacted with CaO with sulfur oxide, whereafter the suspended solid particles are separate (6) from the gas and are leached (15,17) with an aqueous medium to form an aqueous salt solution which is recycled to the reaction chamber (2).

EP 0 286 232 A1

## Process and apparatus for desulfurizing a hot, sulfur oxide containing gas.

This invention relates to a process for desulfurizing a hot, sulfur oxide containing gas, such as flue gas, wherein a material which is capable of reacting with sulfur oxide (in the following referred to as the reagent) and water are contacted with the hot gas in the presence of a salt in a reaction zone to form a gaseous product containing suspended solid particles of a product formed by the reaction of the reagent with the sulfur oxide containing gas and non-reacted reagent, and wherein the suspended solid particles are separated in a separation zone, and optionally recycled and mixed with the hot gas.

EP patent publication No. 0 114 477 A1 discloses a process in which a hot flue gas is desulfurized by dispersing an absorption agent and water in a stream of hot flue gas so as to produce a dry powder comprising a product formed by the reaction of the absorption agent with sulfur oxide, separating the powder from the flue gas and recycling part of the separated powder to the reaction zone.

A preferred reagent for use in the prior art process is calcium or magnesium oxide, and it is particularly advantageous to mix CaO with the water to form an aqueous slurry of $Ca(OH)_2$ before the slurry is mixed with the hot, sulfur oxide containing gas in the reaction zone.

It is well known that the efficiency of such a process for semi-dry desulfurization of a flue gas can be significantly increased by carrying out the reaction of reagent with the sulfur oxide containing gas in the presence of one or more salts, and preferably one or more chlorides, such as NaCl and/or $CaCl_2$, cf. Karlsson, Hans T.; Klingspor, Jonas; Linné, Marita and Bjerle, Ingemar: "Activated Wet-Dry Scrubbing of $SO_2$", Journal of the Air Polution Control Association, Vol. 33, No.1 January 1983, pp 23-28. This article mentions that the efficiency of the scrubbing of $SO_2$ can be enhanced from about 75% to about 95% by adding to the CaO a few percent of $CaCl_2$. These results have been confirmed by full scale tests in a Danish power plant.

In some cases hot flue gases contain chlorine which reacts with the reagent to form the corresponding chloride salt. Such chlorine containing flue gases are formed by combustion of chlorine containing coal.

If the hot gas does not form a sufficient amount of such salt(s), the latter may be added to a mixture of reagent and water before such mixture is contacted with the hot gas. However, it is particularly advantageous to introduce the salt into the mixture of reagent and water by using sea water as the water component.

When using a salt as an additive in the process described above, the salt will be present in the solid particles separated from the gaseous product in the separation zone. These particles are considered to be a waste material which has to be discharged. Due to the high content of chloride salt(s) the discharge of the waste material by deposition in nature may present problems and may in some countries require a special official permit.

The invention is based on the discovery that by utilizing the water which is mixed with reagent and hot, sulfur oxide containing gas, it is possible to remove salt from the solid particles and to obtain a high salt concentration in the mixture of reagent, water, and hot gas without addition of extra salt, and that the use of such a high salt concentration results in a more effective desulfurization of the gas. In this manner the deposition of added salt in connection with the discharge of the solid particles separated from the gas can be eliminated. This can be a decisive factor in order to obtain an official deposition permit.

The process of the invention comprises the steps of leaching at least part of the solid particles separated from the gaseous product in the separation zone with an aqueous leaching agent to form an aqueous salt solution and introducing the salt solution thus formed into the reaction zone.

In a preferred embodiment of the process of the invention at least part of the water required in the reaction of the reagent with the hot gas is supplied to the leaching zone. A particularly efficient leaching of the solid particles is obtained by effecting the leaching operation in more than one e.g. two steps and by supplying fresh water to the partially leached particles obtained in the first leaching step and by using the salt solution formed in the second leaching step as leaching agent in the first leaching step.

Instead of supplying all water to the leaching zone, part of the water may be introduced into the reaction zone in which it is admixed with the salt solution formed in the leaching zone.

As mentioned above the salt used is preferably NaCl or $CaCl_2$, and the salt is preferably used in such an amount that the salt is present in the reaction zone in a concentration of from 3 to 10% by weight of the reagent.

The invention also relates to an apparatus for carrying out the process described above. The apparatus of the invention comprises a reaction chamber having an inlet for sulfur oxide containing gas, means for introducing a material which is capable of reacting with sulfur oxide, means for introducing an aqueous medium, and an outlet for solid particles suspended in a gas, the outlet being connected with a separation chamber for separating solid particles from the gas and having means for discharging solid particles and an outlet for treated gaseous product. The characteristic features of the apparatus of the invention are that the means for discharging solid particles from the separation chamber are connected with at least one leaching apparatus having inlet means for aqueous medium, means for discharging leached solid material, and an outlet for a salt solution, said outlet being connected with the reaction chamber.

The leaching apparatus is preferably a hydrocyclone.

In a preferred embodiment of the apparatus of the invention the leaching apparatus comprises two interconnected hydrocyclones, the means for discharging leached solid material from the first hydrocyclone being connected with means for introducing solid material into the second hydrocyclone, and the outlet means for salt solution of the second hydrocyclone being connected with inlet means for solid material of the first hydrocyclone.

In a further preferred embodiment of the apparatus of the invention comprising two hydrocyclones, the second hydrocyclone comprises an inlet for fresh water. By introducing the fresh water in the second hydrocylone, the extraction of the salts contained in the solid particles separated from the gas becomes particularly effective. In an apparatus of the invention the amount of solid particles introduced into the leaching apparatus will typically constitute one half of the amount of solid particles removed from the reaction zone. Since the salt concentration of the solid particles introduced into the leaching apparatus is the same as that of the solid particles removed from the reaction zone, the salt recycling X can be calculated on the basis of the following equation:

$$X = \frac{n_s}{2-n_s}$$

wherein $n_s$ is the degree of leaching.

If the degree of leaching $n_s$ is 0.5, the salt recycling X is equal to 0.33 which means that the salt concentration in the reaction zone has been increased by 33%. Tests have shown that it is possible to obtain a degree of leaching, $n_s$, of above 0.7 which corresponds to an increase of the salt concentration of 54%.

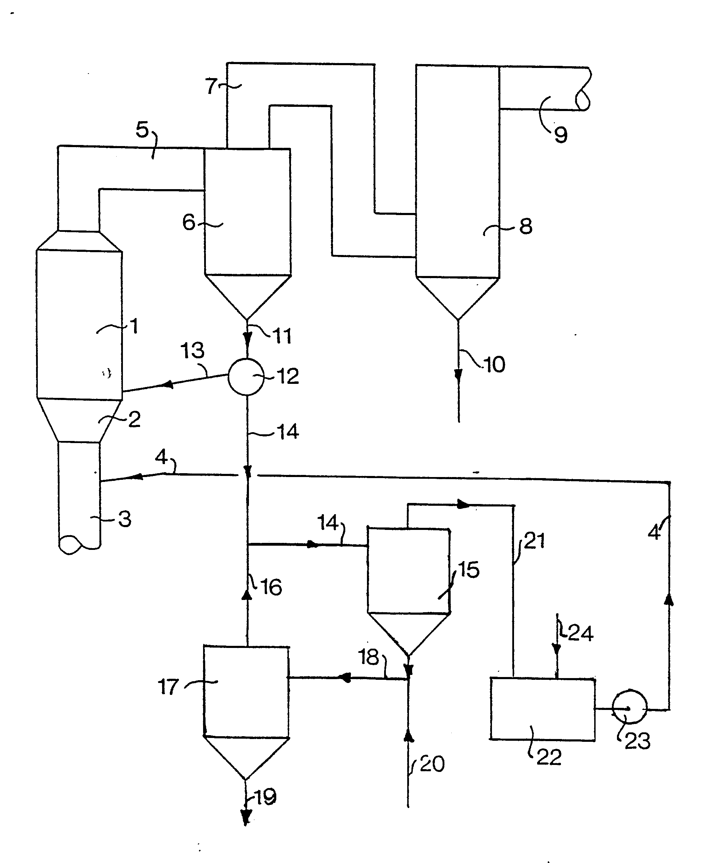

The invention will now be described in further detail with reference to the drawing which - schematically illustrates a preferred embodiment of the apparatus of the invention.

The drawing shows a cylindrical reaction chamber 1 comprising a conical bottom 2 and an inlet pipe 3 for hot, sulfur oxide containing gas. The inlet pipe 3 is connected with a conduit 4 for the introduction of an aqueous solution of a material which is capable of reacting with sulfur oxide (reagent), and one or more salts. Via a pipe 5 the upper end of the reaction chamber 1 is connected with a cyclone separator 6 for the separation of a coarse solids fraction from the gas/solids suspension formed in the reaction chamber 1. The upper end of the cylone separator 6 is connected with a second separator 8 via a pipe 7. The second separator 8 serves to separate a fine fraction of the solids contained in the suspension introduced into the separator 8 and comprises a pipe 9 for discharging gas and an outlet 10 for solids.

The lower end of the cylone separator 6 is connected with a distributing valve 12 via a conduit 11. The valve 12 is connected with the reaction chamber 1 via a conduit 13 and via another conduit 14 with a first hydrocyclone 15. The conduit 14 is also connected with a liquid outlet conduit 16 of a second hydrocylone 17.

The bottom of the first hydrocylone 15 is connected with the inlet of the second hydrocyclone 17 via a conduit 18. The second hydrocylone 17 comprises the above mentioned outlet conduit 16 and an outlet 19 for leached material. The conduit 18 is connected with a conduit 20 for the supply of fresh water.

The hydrocyclone 15 comprises a liquid outlet conduit 21 which is connected with a mixer 22. The mixer 22 is connected with the inlet pipe 3 via the conduit 4. A pump 33 is mounted in the conduit 4 in proximity to the mixer 22. The mixer 22 also comprises an inlet 24 for reagent.

The apparatus illustrated is operated in the following manner:

A mixture of hot, sulfur oxide containing gas, such as flue gas, an aqueous solution of a reagent, e.g. $Ca(OH)_2$ and salts, is introduced into the reaction chamber 1 through the inlet pipe 3. At the same time a solid material is supplied to the reaction zone through the conduit 13 and the mixture thus obtained is maintained in the reaction chamber 1 for a sufficiently long period to allow sulfur dioxide contained in the flue gas to react with the reagent and to form a suspension of solid particles in the gas.

This suspension is passed into the cylone separator 6 through the pipe 5 and a coarse fraction of solid particles are separated from the gas within the separator 6. The gas thus obtained is passed through the pipe 7 into the second separator 8 in which a fine fraction of solid particles is separated. The fine particles are discharged through the conduit 10, and the gas is discharged into the atmosphere through the pipe 9.

The coarse solid particles separated in the cylone separator 6 are passed through the conduit 11 to the distributing valve 12 from which part of the solid particles is recycled to the reaction chamber 1 through the conduit 13, and another part is introduced into the hydrocyclone 15 together with an aqueous solution from the second hydrocyclone which aqueous solution is supplied through the outlet conduit 16.

During the stay in the hydrocyclone 15 soluble substances and mainly salts are removed from the solid particles by leaching, and the product is divided into a liquid phase and solid phase. The solid phase is passed into the second hydrocyclone 17 through the conduit 18, and at the same time water supplied through the conduit 20 is added thereto. The solid product is subjected to a further leaching operation in the second hydrocylone 17, and the leached product is subsequently separated and discharged through the outlet 19.

The liquid phase formed in the second hydrocyclone 17 is removed through the conduit 16 and is mixed with the solid particles which are introduced into the hydrocylone 15 through the conduit 14. The aqueous solution formed in the hydrocylone 15 is passed into the mixer 22 through the conduit 21, and reagent, a supplementary amount of salt, if any, and water are supplied to the mixer 22. The materials supplied to the mixer 22 are mixed therein to form an aqueous solution which is then passed through the pipe 4 to the inlet pipe 3 by means of the pump 23. The aqueous solution is mixed with the incomming hot flue gas in the pipe 3.

## Claims

1. A process for desulfurizing a hot, sulfur oxide-containing gas wherein a material (reagent) which is capable of reacting with sulfur oxide and water are contacted with the hot gas in the presence of a salt in a reaction zone (1) to form a gaseous product containing suspended particles of a product formed by the reaction of the reagent with the sulfur oxide-containing gas and non-reacted reagent, and wherein the suspended solid particles are separated in a separation zone (6,8) and optionally recycled and mixed with the hot gas, characterized in that at least part of the solid particles from the gaseous product in the separation zone are leached in a leaching zone (15,17) with an aqueous leaching agent to form an aqueous salt solution and the salt solution thus formed is introduced into the reaction zone.

2. A process according to claim 1, in which at least part of the water required in the reaction of the reagent with the hot gas is supplied (20) to the leaching zone (15,17).

3. A process according to claim 1 or claim 2, in which the leaching is effected in two steps (15,17), fresh water is supplied (20) to the partially leached particles obtained in the first leaching step (15) and the salt solution formed in the second leaching step (17) is used as leaching agent in the first leaching step (15).

4. An apparatus for desulfurizing a hot, sulfur oxide-containing gas, the apparatus comprising a reaction chamber (1) having an inlet (3) for the hot, sulfur oxide-containing gas, means (4) for introducing a material (reagent) which is capable of reacting with sulfur oxide, and an outlet (5) for solid particles suspended in a gas; and a separation chamber (6) to which the outlet (5) is connected, for separating solid particles from the gas, and having means (11) for discharging solid particles and an outlet (7) for treated gaseous product, characterized in that the means (11) for discharging solid particles from the separation chamber is connected with at least one leaching apparatus (15) having inlet means (14) for an aqueous medium, means (18) for discharging leached solid material, and an outlet (21) for a salt solution, the outlet (21) being connected with the reaction chamber (1).

5. An apparatus according to claim 4, in which the leaching apparatus comprises a hydrocyclone (15,17).

6. An apparatus according to claim 4 or claim 5, in which the leaching apparatus comprises two interconnected hydrocyclones (15,17), the means (18) for discharging leached solid material from the first hydrocyclone (15) being connected with means (18) for introducing solid material into the second hydrocyclone, and the salt solution outlet (16) of the second hydrocyclone being connected with the inlet means (14) for solid material of the first hydrocyclone (15).

7. An apparatus according to claim 6, which further comprises a conduit for introducing fresh aqueous solution into the first hydrocyclone.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-A-2 323 508 (H. HÖLTER) <br> * complete document * <br> --- | 1 | B 01 D 53/34 |
| A | EP-A-0 139 352 (F.L. SMIDTH & CO. A/S) <br> * claims 1,16,26 * <br> --- | 1,4 | |
| A | DE-A-2 548 845 (UNIBRA S.A.) <br> * claims 1,3,10 * <br> --- | 1 | |
| A | EP-A-0 128 589 (SYDKRAFT AB) <br> * claims 1,2 * <br> ----- | | |

TECHNICAL FIELDS SEARCHED (Int. Cl.4)

B 01 D 53/00

The present search report has been drawn up for all claims

| Place of search | Date of completion of the search | Examiner |
|---|---|---|
| BERLIN | 19-06-1988 | BERTRAM H E H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P0401)